# EUROPEAN PATENT APPLICATION

(11) **EP 1 855 298 A1**
(43) Date of publication of application: **14.11.2007**
(21) Application number: 06712627.6
(22) Date of filing: 30.01.2006
(51) Int. Cl.: H01G 9/038

(54) **NONAQUEOUS ELECTROLYTE FOR ELECTROCHEMICAL ENERGY STORAGE DEVICE AND ELECTROCHEMICAL ENERGY STORAGE DEVICE MAKING USE OF THE SAME**

(30) Priority: 04.03.2005 JP 2005060130
(71) Applicant: MATSUSHITA ELECTRIC INDUSTRIAL CO., LTD., Osaka 571-8501 (JP)
(72) Inventor: MATSUI,Tooru c/o Matsushita Electric Industrial Co.Ltd, 2-1-61, Shiromi Cho-ku, Osaka-shi Osaka 540-6207 (JP); DEGUCHI, Masaki c/o Matsushita Electric Industrial Co.Ltd, 2-1-61, Shiromi Chuo-ku Osaka-shi, Osaka 540-6207 (JP); YOSHIZAWA, Hiroshi c/o Matsushita Electric Industrial Co.Ltd, 2-1-61, Shiromi Chuo-ku Osaka-shi, Osaka 540-6207 (JP)
(74) Representative: Schwabe, Hans-Georg
(86) International application number: PCT/JP2006/301484
(87) International publication number: WO 2006/095507

(57) **Abstract**

A nonaqueous electrolyte solution for electrochemical energy-storing device, comprising (a) a lithium salt, (b) a quaternary ammonium salt containing a quaternary ammonium cation having three or more methyl groups, and (c) a nonaqueous solvent, that allows reliable insertion and extraction of lithium ions into and out of a negative-electrode material having a graphite structure even when the quaternary ammonium salt is dissolved in the nonaqueous electrolyte solution, provides an electrochemical energy-storing device that allows a higher voltage setting in charge and is resistant to capacity deterioration even after repeated charge/discharge cycles.

## Description

### FIELD OF THE INVENTION

The present invention relates to an electrochemical energy-storing device such as electric double-layer capacitor or nonaqueous electrolyte solution secondary battery, and in particular, to improvement in characteristics of electrode reaction with a nonaqueous electrolyte solution.

### BACKGROUND OF THE INVENTION

Electric double-layer capacitors employing polarizing electrodes as its positive and negative electrodes allow charge and discharge under high load, because cations and anions are absorbed and desorbed on the electrode surface in the charge and discharge processes. Powder or fiber of activated carbon having high specific surface has been used as the polarizing electrode, and the electrode is prepared by blending activated carbon as needed with a conductive substance such as carbon black and a binder and molding the mixture. When the cation is ammonium cation in such an electric double-layer capacitor, it is possible to charge and discharge the capacitor under still higher load because the cation is a less solvated and more mobile ion. Use of a nonaqueous solvent as a solvent for electrolyte solution with supporting electrolytes dissolved can set a higher charge voltage on the electric double-layer capacitor and consequently increase of the capacitor energy density.

Typical nonaqueous solvents used for the electrolyte solution include a cyclic carbonate such as ethylene carbonate (hereinafter, referred to as EC), propylene carbonate (hereinafter, referred to as PC), butylene carbonate (hereinafter, referred to as BC), and a cyclic ester such as γ-butylolactone (hereinafter, referred to as γ-BE). The nonaqueous electrolyte solution is prepared by dissolving a quaternary ammonium salt such as N,N,N,N-tetraethylammonium tetrafluoroborate (hereinafter, referred to as TEA-BF₄) or N,N,N-triethyl-N-methylammonium tetrafluoroborate (hereinafter, referred to as TEMA-BF₄) in such a nonaqueous solvent.

A method of improving the energy density of the electric double-layer capacitor is to raise the charge voltage setting further. It means that the positive-electrode charge potential is made more positive (higher) or the negative-electrode charge potential is made more negative (lower).

To make the negative-electrode charge potential lower, proposed was a negative electrode of a carbon material, such as graphite, allowing insertion/extraction of lithium ion, replacing a polarizing electrode such as of activated carbon. Specifically, proposed was a secondary power source employing, as the negative electrode, a lithium-containing carbon fiber that was previously prepared by making a carbon fiber seemingly having a graphite structure be inserted by lithium ion electrochemically in an organic electrolyte solution with a lithium salt dissolved (Patent Document 1). Also proposed was a secondary power source allowing insertion of lithium ion into a graphite material during charge, in which a mixture of activated carbon and graphite material obtained by heat treatment of petroleum coke is used as the negative electrode and an organic electrolyte solution is used with a lithium salt and a quaternary ammonium salt dissolved in the electrolyte solution (Patent Document 2). TEMA-BF₄ was exemplified as the quaternary ammonium salt in these documents.

However, after intensive studies on the conventional secondary power sources, the inventors have found that, when TEMA-BF₄ was dissolved in the electrolyte solution, N,N,N-triethyl-N-methylammonium ions (hereinafter, referred to as TEMA ion) ware inserted more readily than lithium ions in graphite during the initial stage of charging, even if a lithium salt was dissolved in the electrolyte solution. This is supported by the fact that a charge voltage of the electrochemical capacitor remains 3.2 V in the Examples of Patent Document 2. Here, the initial stage of charging means a process of starting to insert lithium ion in graphite electrochemically in the state where there is no lithium in the graphite interlayer. Continued charging leads to destruction of layered structure of the graphite caused by insertion of the TEMA ion, hindering insertion of lithium ion and thus, causing a problem that the negative-electrode potential becomes not lower.

In Patent Document 1, lithium ions are previously inserted in the graphite material in an electrolyte solution containing no quaternary ammonium salt in order to prevent TEMA-ions from inserting into the graphite interlayer in the initial stage of charging. The insertion of the TEMA ions in the electrolyte solution containing TEMA-BF₄ is avoided, probably because a film allowing permeation of lithium ions but no TEMA ions is formed on the graphite material surface when lithium ions are inserted in advance. However, repeated charge/discharge cycles lead to decomposition of the film by expansion and shrinkage of the graphite material, causing a problem of increase in capacity deterioration due to penetration of the TEMA ions into the graphite interlayer and reduction of the TEMA ions by lower polarized negative electrode.
Patent Document 1: Japanese Unexamined Patent Publication No. Hei.11-144759
Patent Document 2: Japanese Unexamined Patent Publication No. 2000-228222

### SUMMARY OF THE INVENTION

An object of the present invention, which was made to solve the problems above, is to provide a nonaqueous electrolyte solution that allows reliable insertion and extraction of lithium ions into and out of an negative-electrode material having a graphite structure even when a quaternary ammonium salt is dissolved in the nonaqueous electrolyte solution, and thus, to provide an electrochemical energy-storing device that can set a higher charge voltage and is resistant to capacity deterioration even after repeated charge/discharge cycles.

The nonaqueous electrolyte solution for the electrochemical energy-storing device according to the present invention, which solved the problems above, is characterized to include (a) a lithium salt, (b) a quaternary ammonium salt containing a quaternary ammonium cation having three or more methyl groups, and (c) a nonaqueous solvent.

The objects, features, aspects, and advantages of the present invention will become more evident in the following detailed description and the drawings attached.

### BREIF DESCRIPTION OF THE DRAWINGS

Figure 1 is a charge curve of the graphite negative electrode in the electrolyte solution in an Example of the present invention.
Figure 2 is a charge curve of the graphite negative electrode in the electrolyte solution in a Comparative Example of the present invention.

### DESCRIPTION OF THE PREFERRED EMBODIMENTS

Typical examples of the lithium salts and the ammonium salts for use in the electrolyte solution for the electrochemical energy-storing device according to the present invention include the followings:

Examples of the lithium salts include lithium hexafluorophosphate (LiPF₆), lithium tetrafluoroborate (LiBF₄), lithium perchlorate (LiClO₄), lithium bis[trifluoromethanesulfonyl]imide (hereinafter, referred to as LiTFSI), lithium bis[pentafluoroethanesulfonyl]imide (hereinafter, referred to as LiBETI), lithium [trifluoromethanesulfonyl] [nonafluorobutanesulfonyl]imide (hereinafter, referred to as LiMBSI), lithium cyclohexafluoropropane-1,3-bis[sulfonyl]imide (hereinafter, referred to as LiCHSI), lithium bis[oxalate(2-)]borate (hereinafter, referred to as LiBOB), lithium trifluoromethyltrifluoroborate (LiCF₃BF₃), lithium pentafluoroethyltrifluoroborate (LIC₂F₅BF₃), lithium heptafluoropropyltrifluoroborate (LiC₃F₇BF₃), lithium tris[pentafluoroethyl]trifluorophosphate (Li(C₂F₅)₃PF₃), and the like, and these compounds may be used alone or in combination of two or more.

The lithium salts are particularly preferably LiTFSI, LiBETI, LiMBSI, LiCHSI, LiBOB, LiCF₃BF₃, and LIC₂F₅BF₃. These lithium salts have a higher reductive decomposition potential, and probably decompose before an ammonium cation penetrates into graphite interlayer, forming a film prohibiting permeation of the ammonium cation.

When LiTFSI is used as the lithium salt, LiTFSI is preferably used in combination with lithium hexafluorophosphate. Addition of lithium hexafluorophosphate prevents corrosion of a positive electrode current collector of aluminum or such by LiTFSI and improves the cycle characteristics further more. The addition amount of lithium hexafluorophosphate is not particularly limited, but preferably, 5 to 20 mol % with respect to the total amount of LiTFSI and lithium hexafluorophosphate.

In the present embodiment, the amount of all lithium salts added is not particularly limited, but, when a solvent having a high dielectric constant such as EC, PC, BC, or γ-BL is used, the molar ratio of lithium salt/nonaqueous solvent is preferably 1/7 or more, more preferably 1/4 or more.

As the quaternary ammonium cation for the quaternary ammonium salt (b) according to the present embodiment, the ammonium cation having three or more methyl groups is used. The ammonium cation for the quaternary ammonium salt according to the present embodiment has at least three methyl groups and is relatively small in ionic volume. Accordingly, even if the ion penetrates into graphite interlayer, excessive destruction of the graphite structure is prevented, because the graphite layers are attracted to each other by Coulomb force. In the nonaqueous electrolyte solution containing the quaternary ammonium salt according to the present embodiment, insertion and extraction of lithium ions into and out of graphite proceed in a stable way, keeping the potential of the negative electrode low, and thus, it is possible to set high the charge voltage of the electrochemical energy-storing device. Since the destruction of the graphite structure is prevented, it is possible to obtain an electrochemical energy-storing device with smaller deterioration in capacity even after repeated charge/discharge cycles at high voltage.

The quaternary ammonium cation of the particular structure above has at least three methyl groups, and a substituent group other than the methyl group is not particularly limited, but preferably an alkyl group. Examples of the quaternary ammonium cations having three or more methyl groups and the alkyl group include tetramethylammonium ion (hereinafter, referred to as TMA ion), trimethylethylammonium ion (hereinafter, referred to as TMEA ion), trimethylpropylammonium ion (hereinafter, referred to as TMPA ion), trimethylbutylammonium ion (hereinafter, referred to as TMBA ion), trimethylpentylammonium ion (hereinafter, referred to as TMPeA ion), and trimethylhexylammonium ion (hereinafter, referred to as TMHA ion). The quaternary ammonium salts having such a quaternary ammonium cation may be used alone or in combination of two or more.

Among the quaternary ammonium salts having such a quaternary ammonium cation, particularly preferable are a tetramethylammonium salt (hereinafter, referred to as TMA salt), a trimethylethylammonium salt (hereinafter, referred to as TMEA salt), a trimethylpropylammonium salt (hereinafter, referred to as TMPA salt), and a trimethylbutylammonium salt (hereinafter, referred to as TMBA salt). Probably, it is because the ammonium cations having an excessively long alkyl group penetrate into the graphite interlayer more easily, inhibiting insertion of lithium ions.

On the other hand, excessive decrease of the ionic size of the ammonium cation makes the ammonium cation more vulnerable to reductive decomposition, and thus, TMEA or TMPA salts containing the quaternary ammonium cation having an ethyl or propyl group are particularly preferable.

Examples of the anions of the quaternary ammonium salt include hexafluorophosphate ion [PF₆(-)], tetrafluoroborate ion [BF₄(-)], perchlorate ion [ClO₄(-)], bis[trifluoromethanesulfonyl]imide ion (hereinafter, referred to as TFSI ion), bis[pentafluoroethanesulfonyl]imide ion (hereinafter, referred to as BETI ion), [trifluoromethanesulfonyl] [nonafluorobutanesulfonyl]imide ion (hereinafter, referred to as MBSI ion), cyclohexafluoropropane-1,3-bis[sulfonyl]imide ion (hereinafter, referred to as CHSI ion), bis[oxalate(2⁻)]borate ion (hereinafter, referred to as BOB ion), trifluoromethyltrifluoroborate ion [CF₃BF₃(-)], pentafluoroethyltrifluoroborate ion [C₂F₅BF₃(-)], heptafluoropropyltrifluoroborate ion [C₃F₇BF₃(-)], tris[pentafluoroethyl]trifluorophosphate ion [(C₂F₅)₃PF₃(-)]and the like. These quaternary ammonium salts having such an anion may be used alone or in combination of two or more.

Similarly to the lithium salts above, the anion of the quaternary ammonium salt is preferably an anion selected from TFSI ion, BETI ion, MBSI ion, CHSI ion, BOB ion, CF₃BF₃(-) ion, and C₂F₅BF₃(-) ion. The anion of the quaternary ammonium salt may be the same as or different from the anion of the lithium salt.

In the present embodiment, the amount of all quaternary ammonium salts added is not particularly limited, but, when the solvent having a high dielectric constant such as EC, PC, BC, or γ-BL is used, the ratio of ammonium salts/nonaqueous solvent is preferably 1/10 or more, more preferably, 1/7 or more. The molar ratio of lithium salt/ammonium salt is not particularly limited, but preferably 10 or less, more preferably closer to 1.

Examples of the nonaqueous solvent (c) for use in the nonaqueous electrolyte solution include cyclic carbonates such as EC, PC, and BC, cyclic esters such as γ-BL, and the like, and these solvents may be used alone or in combination of two or more. However, a linear carbonate such as dimethyl carbonate (hereinafter, referred to as DMC), ethylmethyl carbonate (hereinafter, referred to as EMC), or diethyl carbonate (hereinafter, referred to as DEC) is preferably not contained if possible. When a linear carbonate is mixed for the purpose of decreasing the viscosity of the electrolyte solution, the linear carbonate is preferably added in a molar ratio of 1/2 or less with respect to the total amount of the cyclic carbonates and cyclic esters.

Addition of a cyclic or linear carbonate having a C=C unsaturated bond to the nonaqueous electrolyte solution is effective in preventing penetration of the ammonium cations into the graphite interlayer. Examples of the cyclic carbonates having a C=C unsaturated bond include vinylene carbonate (hereinafter, referred to as VC), vinylethylene carbonate (hereinafter, referred to as Vec), divinylethylene carbonate (hereinafter, referred to as DVec), phenylethylene carbonate (hereinafter, referred to as Pec), and diphenylethylene carbonate (hereinafter, referred to as DPec), and Vec and Pec are particularly preferable. Examples of the linear carbonates having a C=C unsaturated bond include methylvinyl carbonate (hereinafter, referred to as MVC), ethylvinyl carbonate (hereinafter, referred to as EVC), divinyl carbonate (hereinafter, referred to as DVC), allylmethyl carbonate (hereinafter, referred to as AMC), allylethyl carbonate (hereinafter, referred to as AEC), diallyl carbonate (hereinafter, referred to as DAC), allylphenyl carbonate (hereinafter, referred to as APC), diphenyl carbonate (hereinafter, referred to as DPC), and the like, and DAC, APC, and DPC are particularly preferable.

The nonaqueous electrolyte solution according to the present embodiment is prepared by dissolving the lithium salt and the quaternary ammonium salt, and as needed additives at a certain rate in the nonaqueous solvent. After dissolved, the lithium salt and the quaternary ammonium salt are contained in the nonaqueous electrolyte solution in the state of cations and anions.

Examples of the carbon materials having a graphite structure in the present embodiment include natural graphite, synthetic graphite, graphite-like highly crystalline carbon materials such as mesophase pitch graphite fiber, graphitized mesocarbon micro bead, gas-phase-grown carbon fiber and graphite whisker, and the like. The graphite structure is the structure of a multi-layer crystal grown to have an interlayer distance of approximately 3.5Å or less.

### EXAMPLES

Hereinafter, favorable Examples of the present invention will be described.

### {Comparison of TMA salt with TEMA salt}

### (Example 1)

A synthetic graphite powder was used as the negative-electrode material for insertion and extraction of lithium ion during charge and discharge. The negative electrode plate was prepared in the following manner. First, 75 parts by mass of the synthetic graphite powder, 20 parts by mass of acetylene black as a conductive substance, and 5 parts by mass of polyvinylidene fluoride resin as a binder were mixed in a dispersion solvent, dehydrated N-methyl-2-pyrrolidone. Then, the mixture was coated on one face of a copper foil current collector having a thickness of 20 µm and dried, to give an active material layer having a thickness of 80 µm. The copper foil current collector carrying the active material layer formed was cut to pieces of 35 mm × 35 mm in size, and a copper current collector plate having a thickness of 0.5 mm with a lead was welded ultrasonically to the copper foil current collector obtained, to give a negative electrode plate.

Separately, LiBF₄, EC, and TMA-BF₄ were mixed at a molar ratio of 1/4/0.1, to give an electrolyte solution. TMA-BF₄, which was dissolved in the solution in the supersaturation state, precipitated when the solution was left at room temperature for about a week.

Separately, LiTFSI, EC, and TMA-TFSI were mixed at a molar ratio of 1/4/0.1, to give the other electrolyte solution. The solution was stable at room temperature.

Using the negative electrode plate thus prepared as a test electrode and lithium metal foils as a counter electrode and as a reference electrode, lithium ions were allowed to insert into the synthetic graphite powder electrochemically in each electrolyte solution prepared. The insertion condition was 20°C and 0.03 mA/cm².

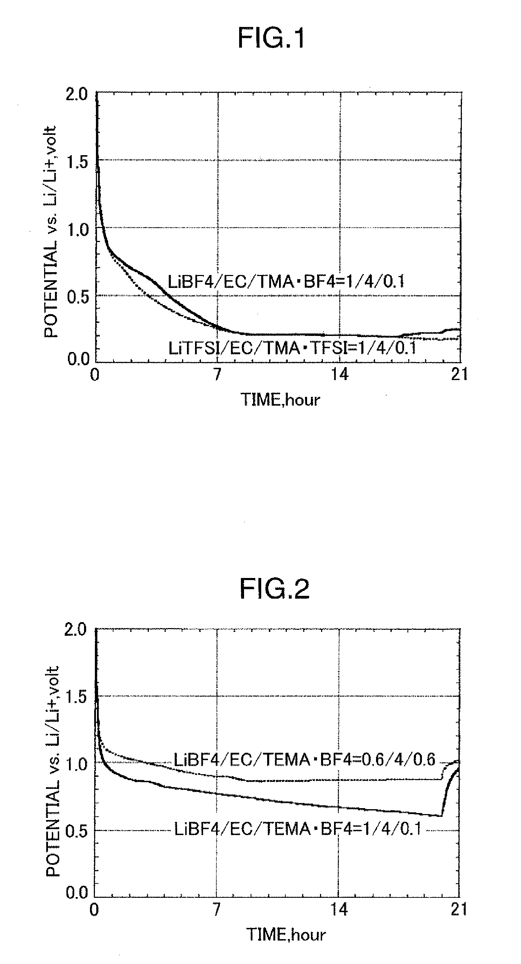

Figure 1 is a chart showing the potential curve when cathodic current until 60 mAh/g was applied to the synthetic graphite powder. The potential in Figure 1 decreased to approximately 0.2 V after current application, and the low potential indicated that lithium ions inserted into the graphite interlayer, forming a third-stage structure. Thus, it is possible to allow stable insertion of lithium ions even when the electrolyte solution contains TMA ions. However, when the anion is BF₄(-), there was increase in potential presumably due to reduction of TMA ions immediately before termination of current application.

### (Comparative Example 1)

The negative electrode plate was prepared with the synthetic graphite powder in a similar manner to Example 1.

LiBF₄, EC, and TEMA-BF₄ were mixed at a molar ratio of 1/4/0.1, to give an electrolyte solution. Separately, LiBF₄, EC, and TEMA-BF₄ were mixed at a molar ratio of 0.6/4/0.6 to give the other electrolyte solution.

Using the negative electrode plate thus prepared as the test electrode and lithium metal foils as the counter electrode and as the reference electrode, lithium ions were allowed to insert into the synthetic graphite powder electrochemically in each electrolyte solution. The insertion condition was 20°C and 0.03 mA/cm².

Figure 2 is a chart showing the potential curve when cathodic current until 60 mAh/g was applied to the synthetic graphite powder. The potential after current application in Figure 2 did not decrease to the potential showing a third-stage structure, indicating that no lithium ions inserted therein. Penetration of TEMA ions are followed by reductive decomposition of EC even at a low TEMA-BF₄ ratio, and thus, it is difficult to make the lithium ions insert therein when the electrolyte solution contains TEMA ions.

### {Studies on the length of the alkyl chain in the quaternary ammonium cation}

### (Example 2)

Influence of the length of the alkyl chain was studied by using quaternary ammonium salts having an alkyl group, which is different in chain length from the methyl group in TMA ion, such as ethyl group (TMEA ion), propyl group (TMPA ion), butyl group (TMBA ion), pentyl group (TMPeA ion), or hexyl group (TMHA ion). The anion used was TFSI ion in all salts.

LiTFSI, EC, and each quaternary ammonium salt were mixed at a molar ratio of 0.6/4/0.6, to give each electrolyte solution.

Using the negative electrode plate of the synthetic graphite powder as the test electrode, lithium ions were allowed to insert into the synthetic graphite powder electrochemically in each electrolyte solution prepared, in a similar manner to Example 1. The insertion condition was 20°C, 0.03 mA/cm², and 60 mAh/g. After insertion of lithium ion into the synthetic graphite powder, anodic current at 0.03 mA/cm² was applied for extraction of the lithium ions from the synthetic graphite powder. The final potential of extraction was 0.8 V.

Table 1 shows the amount of lithium extracted from the synthetic graphite powder in each electrolyte solution. This experiment showed that it was possible to insert and extract lithium ions reliably by using the quaternary ammonium salts containing the quaternary ammonium cation having three or more methyl groups. As shown in Table 1, among the quaternary ammonium salts, preferable are TMA salt, TMEA salt, TMPA salt, and TMBA salt, and particularly, lithium ions were favorably inserted and extracted in the nonaqueous electrolyte solution containing TMEA or TMPA salt.

**[Table 1]**

| AMMONIUM ION COEXISTING IN ELECTROLYTE SOLUTION | AMOUNT OF LITHIUM EXTRACTED (mAh/g) |
|---|---|
| TMA ION | 44 |
| TMEA ION | 48 |
| TMPA ION | 47 |
| TMBA ION | 40 |
| TMPeA ION | 29 |
| TMHA ION | 16 |
| DMDEA ION | - |
| TEMA ION | - |

### (Comparative Example 2)

Influence of the number of methyl groups was studied by using the quaternary ammonium salt containing the quaternary ammonium cation (DMDEA ion) having two ethyl groups replacing the two methyl groups in TMA ion or the quaternary ammonium cation (TEMA ion) having three ethyl groups replacing the three methyl groups in TMA ion. The anion used was TFSI ion in all salts.

LiTFSI, EC, and each quaternary ammonium salt were mixed at a molar ratio of 0.6/4/0.6, to give each electrolyte solution.

Using the negative electrode plate of the synthetic graphite powder as the test electrode, lithium ions were allowed to insert into the synthetic graphite powder electrochemically in each electrolyte solution prepared in a similar manner to Example 1. The insertion condition was 20°C, 0.03 mA/cm², and 60 mAh/g. After insertion of lithium ions into the synthetic graphite powder, anodic current at 0.03 mA/cm² was applied for extraction of the lithium ions from the synthetic graphite powder.

As shown in Table 1, no lithium ion was extracted from the synthetic graphite powder with the DMDEA or TEMA salt. As indicated by Comparative Example 1, it is because lithium ions were not inserted into the synthetic graphite powder.

### {Studies on the anion of the quaternary ammonium salt}

### (Example 3)

The quaternary ammonium salts having TMEA ion as the quaternary ammonium cation and having PF₆(-), BF₄(-), ClO₄(-), TFSI ion, BETI ion, MBSI ion, CHSI ion, BOB ion, CF₃BF₃(-), C₂F₅BF₃(-), C₃F₇BF₃(-), or (C₂F₅)₃PF₃(-) as the anion were evaluated. The lithium salt used was LiTFSI.

The lithium salt, EC, and each quaternary ammonium salt were mixed at a molar ratio of 1/4/0.1, to give an electrolyte solution.

Using the negative electrode plate of the synthetic graphite powder as the test electrode, lithium ions were allowed to insert into the synthetic graphite powder electrochemically in each electrolyte solution prepared in a similar manner to Example 1. The insertion condition was 20°C, 0.03 mA/cm², and 60 mAh/g. After insertion of lithium ions into the synthetic graphite powder, anodic current at 0.03 mA/cm² was applied for extraction of the lithium ions from the synthetic graphite powder. The final potential of extraction was 0.8 V.

Table 2 shows the amount of the lithium extracted from the synthetic graphite powder in each electrolyte solution. The experiment shows that, if the quaternary ammonium salt containing TMEA ion having three methyl groups is used as the ammonium salt, it is possible to insert and extract lithium ion, independently of the anion used. Insertion and extraction of lithium ion are particularly favorable in the nonaqueous electrolyte solution containing the quaternary ammonium salt having TFSI ion, BETI ion, MBSI ion, CHSI ion, BOB ion, CF₃BF₃(-) ion, or C₂F₅BF₃(-) ion.

**[Table 2]**

| ANION OF LITHIUM SALT AND QUATERNARY AMMONIUM SALT | AMOUNT OF LITHIUM EXTRACTED (mAh/g) |
|---|---|
| PF₆(-) | 31 |
| BF₄(-) | 30 |
| ClO₄(-) | 32 |
| TFSI ION | 42 |
| BETI ION | 41 |
| MBSI ION | 40 |
| GHSI ION | 38 |
| BOB ION | 36 |
| CF₃BF₃(-) | 39 |
| C₂F₅BF₃(-) | 36 |
| C₃F₇BF₃(-) | 24 |
| (C₂F₅)₃PF₃(-) | 27 |

### {Preparation of the electrochemical energy-storing device} (Example 4)

### A polarizing electrode was prepared in the following manner:

A phenol resin-based activated carbon powder having a specific surface area of 1,700 m²/g, acetylene black as a conductive substance, carboxymethylcellulose ammonium salt as a binder, and water and methanol as dispersion solvents were mixed at a mass ratio of 10:2:1:100:40. The mixture was coated on an aluminum-foil current collector having a thickness of 20 µm and dried, to form an active material layer having a thickness of 80 µm. The aluminum-foil current collector carrying the active substance layer formed was cut into pieces of 35 mm × 35 mm in size. An aluminum current collector plate having a thickness of 0.5 mm with a lead was connected to the aluminum-foil current collector by ultrasonic welding, to give a polarizing electrode.

The polarizing electrode thus prepared was used as the positive electrode, and the synthetic graphite powder electrode prepared in a similar manner to Example 1 was used as the negative electrode. A nonwoven-fabric polypropylene separator was placed between the two electrodes, and the entire composite was wound and placed in an aluminum laminate tube, to give an electrochemical energy-storing device.

Separately, LiTFSI, LiPF₆, EC, and TMEA-TFSI were mixed at a molar ratio of 0.95/0.05/4/0.1, to give an electrolyte solution.

The electrochemical energy-storing device thus assembled was charged and discharged repeatedly at 20°C and at a constant current of 3 mA/cm² in the voltage range of 3.0 to 4.2 V in order to evaluate the change in capacity. The capacity retention rate, the capacity after 1,000 cycles divided by that after 10 cycles, was 0.97.

### (Comparative Example 3)

An electrochemical energy-storing device was assembled in a similar manner to Example 4, except that the electrolyte solution in which LiBF₄, LiPF₆, EC, and TEMA-BF₄ were mixed at a molar ratio of 0.95/0.05/4/0.1 was used.

The electrochemical energy-storing device assembled was charged and discharged repeatedly in the voltage range of 1.0 to 3.2 V at 20°C and at a constant current of 3 mA/cm², and the change in capacity determined was small. However, when the device was charged and discharged in the voltage range of 3.0 to 4.2 V, the device capacity became almost zero after 70 cycles, and the aluminum laminate tube was expanded significantly. The expansion was caused by ethylene gas generated in the device.

As described above, the nonaqueous electrolyte solution for electrochemical energy-storing device according to the present invention characteristically contains (a) a lithium salt, (b) a quaternary ammonium salt containing a quaternary ammonium cation having three or more methyl groups, and (c) a nonaqueous solvent.

The quaternary ammonium cation in the particular structure for the quaternary ammonium salt according to the present invention contains at least three methyl groups and has a relatively smaller ionic volume. Accordingly, even if the ions penetrate into graphite interlayer, excessive destruction of the graphite structure is avoided, because the graphite layers are attracted to each other by Coulomb force. In addition, in the nonaqueous electrolyte solution containing the quaternary ammonium salt according to the present invention, insertion and extraction of lithium ion proceed in a stable way into and out of graphite, keeping the potential of the negative electrode low, and thus, it is possible to set high the charge voltage of the electrochemical energy-storing device. Since the destruction of the graphite structure is prevented, it is possible to obtain the electrochemical energy-storing device resistant to capacity deterioration even after repeated charge/discharge cycles at high voltage.

In the present invention, the quaternary ammonium cation is preferably a cation selected from the group consisting of tetramethylammonium ion, trimethylethylammonium ion, trimethylpropylammonium ion and trimethylbutylammonium ion.

Because the quaternary ammonium cation has a short-chain alkyl group as the substituent group other than methyl group, penetration of the ammonium cations into the graphite interlayer is prevented, allowing reliable insertion of lithium ions into the graphite interlayer.

Also in the present invention, the quaternary ammonium cation is preferably a trimethylethylammonium ion or a trimethylpropylammonium ion.

These quaternary ammonium cations are superior in the properties above and also prevent reductive decomposition of the ammonium cations in the final charging stage.

The anion of (a) the lithium salt and the anion of (b) the quaternary ammonium salt according to the present invention may be the same as or different from each other, and it is favorably an anion selected from the group consisting of bis[trifluoromethanesulfonyl]imide ion, bis[pentafluoroethanesulfonyl]imide ion, [trifluoromethanesulfonyl] [nonafluorobutanesulfonyl]imide ion, cyclohexafluoropropane.1,3-bis[sulfonyl]imide ion, bis[oxalate(2-)]borate ion, trifluoromethyltrifluoroborate ion and pentafluoroethyltrifluoroborate ion.

The nonaqueous electrolyte solution containing the lithium salt and the quaternary ammonium salt allows a high voltage setting in charge.

Also in the present invention, (a) the lithium salt used is preferably a combination of lithium bis[trifluoromethanesulfonyl]imide and lithium hexafluorophosphate.

In the configuration above, addition of lithium hexafluorophosphate prevents corrosion of the positive electrode current collector of aluminum or such by LiTFSI, and give the superior cycle characteristics.

The present invention further provides an electrochemical energy storing device using the nonaqueous electrolyte solution described above.

In the configuration above, it is possible to obtain the electrochemical energy-storing device being higher in charge voltage and resistant to capacity deterioration during repeated charge/discharge cycles.

### [Industrial Applicability]

As described above, it becomes possible to insert and extract lithium ions into and out of a carbon material having a graphite structure, by using an electrolyte solution containing a quaternary ammonium salt having a quaternary ammonium cation having three or more methyl groups. By using the nonaqueous electrolyte solution, it is possible to obtain an electrochemical energy-storing device being higher in charge voltage and superior in cycle characteristics.

## Claims

1. A nonaqueous electrolyte solution for electrochemical energy-storing device, comprising (a) a lithium salt, (b) a quaternary ammonium salt containing a quaternary ammonium cation having three or more methyl groups, and (c) a nonaqueous solvent.

2. The nonaqueous electrolyte solution for electrochemical energy-storing device according to Claim 1, wherein said quaternary ammonium cation is a cation selected from the group consisting of tetramethylammonium, trimethylethylammonium, trimethylpropylammonium and trimethylbutylammonium ions.

3. The nonaqueous electrolyte solution for electrochemical energy-storing device according to Claim 1, wherein said quaternary ammonium cation is a trimethylethylammonium ion or trimethylpropylammonium ion.

4. The nonaqueous electrolyte solution for electrochemical energy-storing device according to Claim 1, wherein the anion of said (a) lithium salt and the anion of said (b) quaternary ammonium salt are the same as or different from each other, and is each an anion selected from the group consisting of bis[trifluoromethanesulfonyl]imide ion, bis[pentafluoroethanesulfonyl]imide ion, [trifluoromethanesulfonyl][nonafluorobutanesulfonyl]imide ion, cyclohexafluoropropane-1,3-bis[sulfonyl]imide ion, bis[oxalate(2-)]borate ion, trifluoromethyltrifluoroborate ion and pentafluoraethyltrifluoroborate ion.

5. The nonaqueous electrolyte solution for electrochemical energy-storing device according to Claim 1, wherein said (a) lithium salt is a combination of lithium bis[trifluoromethanesulfonyl]imide and lithium hexafluorophosphate.

6. An electrochemical energy-storing device, comprising the nonaqueous electrolyte solution for electrochemical energy-storing device according to any one of Claims 1 to 5.

## Amended claims

### Amended claims under Art. 19.1 PCT

**1.** (amended) A nonaqueous electrolyte solution for electrochemical energy-storing device containing a carbon material in its negative electrode, comprising (a) a lithium salt, (b) a quaternary ammonium salt containing a quaternary ammonium cation having three or more methyl groups, and (c) a nonaqueous solvent.

**2.** The nonaqueous electrolyte solution for electrochemical energy storing device according to Claim 1, wherein said quaternary ammonium cation is a cation selected from the group consisting of tetramethylammonium, trimethylethylammonium, trimethylpropylammonium and trimethylbutylammonium ions.

**3.** The nonaqueous electrolyte solution for electrochemical energy-storing device according to Claim 1, wherein said quaternary ammonium cation is a trimethylethylammonium ion or trimethylpropylammonium ion.

**4.** The nonaqueous electrolyte solution for electrochemical energy-storing device according to Claim 1, wherein the anion of said (a) lithium salt and the anion of said (b) quaternary ammonium salt are the same as or different from each other, and is each an anion selected from the group consisting of bis[trifluoromethanesulfonyl]imide ion, bis [pentafluoroethanesulfonyl]imide ion, [trifluoromethanesulfonyl][nonafluorobutanesulfonyl]imide ion, cyclohexafluoropropane-1,3-bis[sulfonyl]imide ion, bis[oxalate(2-)]borate ion, trifluoromethyltrifluoroborate ion and pentafluoroethyltrifluoroborate ion.

**5.** The nonaqueous electrolyte solution for electrochemical energy-storing device according to Claim 1, wherein said (a) lithium salt is a combination of lithium bis[trifluoromethanesulfonyl]imide and lithium hexafluorophosphate.

**6.** An electrochemical energy-storing device, comprising the nonaqueous electrolyte solution for electrochemical energy-storing device according to any one of Claims to 5.
